# EUROPÄISCHE PATENTSCHRIFT

(11) **EP 0 894 606 B1**
(45) Veröffentlichungstag und Bekanntmachung des Hinweises auf die Patenterteilung: **17.10.2001**
(21) Anmeldenummer: 98113169.1
(22) Anmeldetag: 15.07.1998
(51) Int. Cl.: B29C 45/26

(54) **Rundklinkenzug**
Circular latch lock
Loquet cylindrique

(30) Priorität: 01.08.1997 DE 19733257
(43) Veröffentlichungstag der Anmeldung: 03.02.1999
(73) Patentinhaber: Strack Norma GmbH. & Co. KG, D-58511 Lüdenscheid (DE)
(72) Erfinder: Schmidt, Klaus, 58579 Schalksmühle (DE)
(74) Vertreter: Dörner, Lothar, Dipl.-Ing.

(56) Entgegenhaltungen:
- DE-A- 4 017 031
- US-A- 5 494 435
- H. EMMERICHS, D. GIESLER: "RUND, PRÄZISE, LANGLEBIG" PLASTVERARBEITER, Bd. 47, Nr. 2, Februar 1996, Seite 28, 30 XP000598606

## Beschreibung

Die Erfindung betrifft einen Rundklinkenzug mit einem an einer Stirnseite offenen, hohlzylindrischen Gehäuse, in dem verdrehsicher zwischen zwei durch einen Mitnehmer bestimmten Endlagen ein an derselben Stirnseite offener Kolben in Axialrichtung bewegbar ist, in dem entgegen der Wirkung einer Feder eine Sicherungsbuchse verschiebbar ist, deren äußere Endlage durch ein von dem Gehäuse gehaltenes und den Kolben radial durchsetzendes Segment bestimmt ist, durch das ein Kopf eines Zugbolzens steckbar ist.

Klinkenzüge dienen dazu, Bewegungsvorgänge in Spritzgießformen zu steuern, die zwei Trennebenen aufweisen. Beim Öffnen der Spritzgießform nach dem Spritzen des Formlings ist es nämlich vielfach notwendig, sie zunächst in einer Trennebene zu öffnen, dabei in der anderen Trennebene verriegelt zu halten, und erst dann, wenn die eine Trennebene genügend geöffnet ist, den verriegelten Teil zu entriegeln und auch die andere Trennebene zu öffnen. Als Anwendungsbeispiel seien sogenannte Abreißformen genannt, bei denen sich während des Entformens der Anguß vom Spritzling löst und außer der Haupttrennebene, durch welche der Spritzling aus der Spritzgießform austreten kann, eine weitere Trennebene vorgesehen ist, aus der der Anguß austreten kann.

Für den genannten Zweck werden u.a. in ihrer Zug- und Verriegelungsfunktion bekannte und als Normteile im Markt eingeführte Rundklinkenzüge der eingangs genannten Art eingesetzt (vgl. z.B. Prospekt "Z 173/... Rundklinkenzug" der Fa. Hasco-Normalien, Lüdenscheid, aus 10/94). H. Emmerichs, D. Giesler : "Rund, präzise, langlebig" Plastverarbeiter Bd. 47, Nr. 2, Februar 1996, Seite 28-30 zeigt einen solchen Rundklinkenzug, der dem Oberbegriff des Anspruchs 1 entspricht. Für die bekannten Rundklinkenzüge muß zwischen den bei Werkzeugen oder Normalien verwendeten Systembohrungen für die Aufnahme der Führungselemente zusätzlicher Raum zur Verfügung gestellt werden. Da die Forderung nach paarweise symmetrischer Anordnung der Rundklinkenzüge besteht, geht für ihre Unterbringung ein wesentlicher Teil der Arbeitsfläche verloren.

Hier will die Erfindung Abhilfe schaffen. Der Erfindung liegt die Aufgabe zugrunde, einen Rundklinkenzug der eingangs genannten Art so auszubilden, daß er neben der Zug- und Verriegelungsfunktion eine Führungsfunktion als zusätzliche Funktion übernimmt, daß aber für seinen Einsatz kein zusätzlicher Raum zur Verfügung gestellt werden muß. Gemäß der Erfindung wird diese Aufgabe dadurch gelöst, daß das Gehäuse innen als Führungsbuchse und der Zugbolzen außen als Führungsbolzen ausgeführt sind, wobei Führungsbuchse und Zugbolzen sich zentrieren.

Mit dem Rundklinkenzug nach der Erfindung ist ihr bisher bekannter Einsatzbereich erweitert. Der Rundklinkenzug übernimmt eine zusätzliche Funktion. Er hat Führungseigenschaften, ähnlich wie die im Werkzeug- und Normalienbereich verwendeten Führungselemente. Die Einbaudurchmesser des Zugbolzens und des Gehäuses des Rundklinkenzuges können in Toleranz und Dimension den Führungselementen eines Normaliensystems angepaßt werden. Der Rundklinkenzug nach der Erfindung kann in Werkzeugen oder Normalien anstelle der üblichen Führungselemente in vorhandene Systembohrungen eingebaut werden. Dadurch entfällt zusätzlicher Einbauraum, z.B. zwischen den Systembohrungen. Es ist zusätzliche Arbeitsfläche für die Konstruktion gewonnen. Der Rundklinkenzug bringt platzsparende Einbaumöglichkeiten mit sich. Er ist rationell einzubauen, was Zeit und Kosten spart. Wenn Rundklinkenzüge nach der Erfindung in vorhandene Systembohrungen eingesetzt werden, entfällt ein relativ hoher Zerspanungsaufwand; es sind nur geringe Modifikationen erforderlich. Für die Befestigung stehen Adapter und Verschraubungs- und Abstimmungselemente zur Verfügung.

In Ausgestaltung der Erfindung weist das Gehäuse einen absatz- oder anschlagdurchmesserfreien glatten Außendurchmesser auf. Dies verbessert weiterhin die Anpassung an die bei Werkzeugen oder Normalien vorhandenen Systembohrungen.

In Weiterbildung der Erfindung ist eine Spritzgießform mit drei axial zueinander bewegbaren, teilweise aus mehreren miteinander lösbar verspannten Platten aufgebauten Formteilen vorgesehen, die gegeneinander mittels Gleitführungsbolzen und-buchsen geführt sind, wobei die Gleitführungsbolzen und -buchsen in die Platten aller Formteile in Axialrichtung durchsetzenden Systembohrungen angeordnet sind, die dadurch gekennzeichnet ist, daß mindestens zwei spiegelsymmetrisch angeordnete Systembohrungen von je einem der Gehäuse und der Führungsbolzen nach der Erfindung durchsetzt sind.

Ein Ausführungsbeispiel der Erfindung ist in der Zeichnung dargestellt und wird nachfolgend im einzelnen beschrieben. Es zeigen:

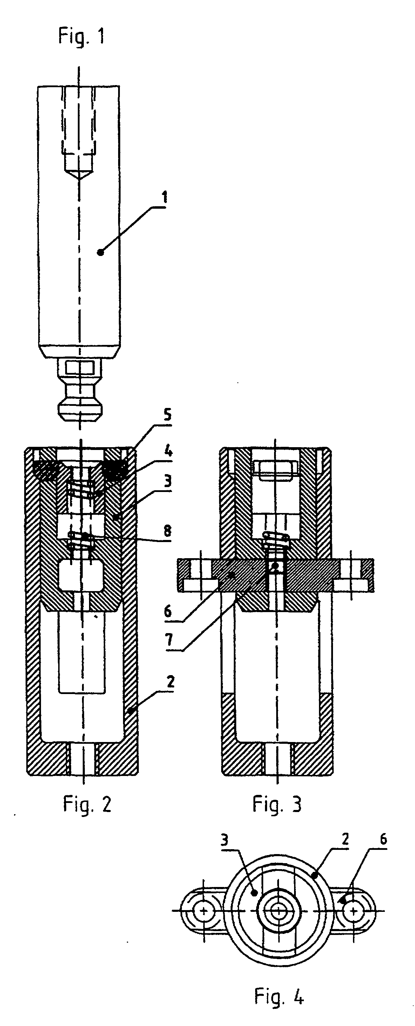

- Fig. 1: einen Zugbolzen eines Rundklinkenzugs in Ansicht;
- Fig. 2: ein zu dem Zugbolzen gehörendes Gehäuse des Rundklinkenzugs im Längsschnitt;
- Fig. 3: das in Fig. 2 dargestellte Gehäuse in einem um 90° gedrehten Längsschnitt;
- Fig. 4: die Draufsicht des in Fig. 3 dargestellten Gehäuses;
- Fig. 5: einen Vertikalschnitt durch ein Formwerkzeug in einer Ebene, in der zwei Systembohrungen liegen, in Ausgangslage;
- Fig. 6: das in Fig. 5 dargestellte Formwerkzeug bei geöffneter erster Trennebene;
- Fig. 7: das in den Figuren 5 und 6 dargestellte Formwerkzeug mit zwei geöffneten Trennebenen;

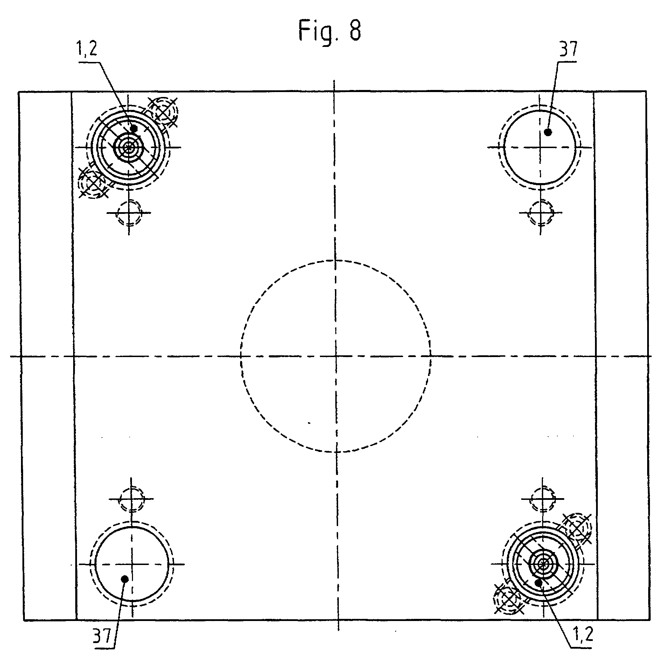

- Fig. 8: die Draufsicht des Formwerkzeugs.

Der als Ausführungsbeispiel gewählte Rundklinkenzug weist einen Zugbolzen 1 und ein den Zugbolzen 1 aufnehmendes Gehäuse 2 auf. Das Gehäuse 2 ist hohlzylindrisch ausgeführt und auf der dem Zugbolzen 1 zugewandten Stirnseite offen. In dem Gehäuse 2 ist verdrehsicher ein an derselben Stirnseite offener Kolben 3 in Axialrichtung bewegbar. Zur Herbeiführung der Verdrehsicherheit ist das Gehäuse 2 mit diametral sich gegenüberliegenden Längsschlitzen versehen, in denen ein mit dem Kolben 3 über einen Gewindestift 7 verbundener Mitnehmer 6 geführt ist. In dem Kolben 3 ist entgegen der Wirkung einer Feder 8 eine Sicherungsbuchse 4 verschiebbar. Die äußere Endlage der Sicherungsbuchse 4 ist durch ein von dem Gehäuse 2 gehaltenes und den Kolben 3 radial durchsetzendes Segment 5 bestimmt. Durch das Segment 5 ist der zugewandte Kopf des Zugbolzens 1 steckbar.

Die als Ausführungsbeispiel gewählte Spritzgießform besteht aus drei in Axialrichtung bewegbaren Formteilen 10, 20 und 30. In üblicher Weise ist das erste äußere Formteil 10 aus Platten 11, 12, 13 und 14 zusammengesetzt, das dritte äußere Formteil 30 aus zwei Platten 31, 32. Zwischen den Formteilen 10 und 20 liegt eine Trennebene 40; zwischen den Formteilen 20 und 30 eine Trennebene 50. Bei einer Bewegung der Spritzgießform in Axialrichtung soll sich zunächst die Trennebene 50 öffnen, sodann nach Zurücklegen eines bestimmten Werkzeugweges die Trennebene 40. Um diese Bewegung zu steuern, sind zwei Rundklinkenzüge vorgesehen, die diametral gegenüberliegend an den Ecken der Spritzgießform in Systembohrungen befestigt sind. In den beiden an den übrigen Ecken vorgesehenen Systembohrungen sind Führungselemente vorgesehen. In dem Formteil 10 sind eine Zentrierbuchse 16 und eine Führungsbuchse 15 in der Systembohrung gehalten; in dem Formteil 20 eine Führungsbuchse 25. Die Führungsbuchsen 15, 16, 25 sind von einem Führungsbolzen 37 durchsetzt, der in dem Formteil 30 befestigt ist. Einzelne Platten sind durch Schraubenbolzen 61 miteinander verbunden. Der Zugbolzen 1 ist in dem Formteil 10 mittels eines Schraubenbolzens 62; das Gehäuse 2 an dem Formteil 30 mittels eines Schraubenbolzens 63 befestigt.

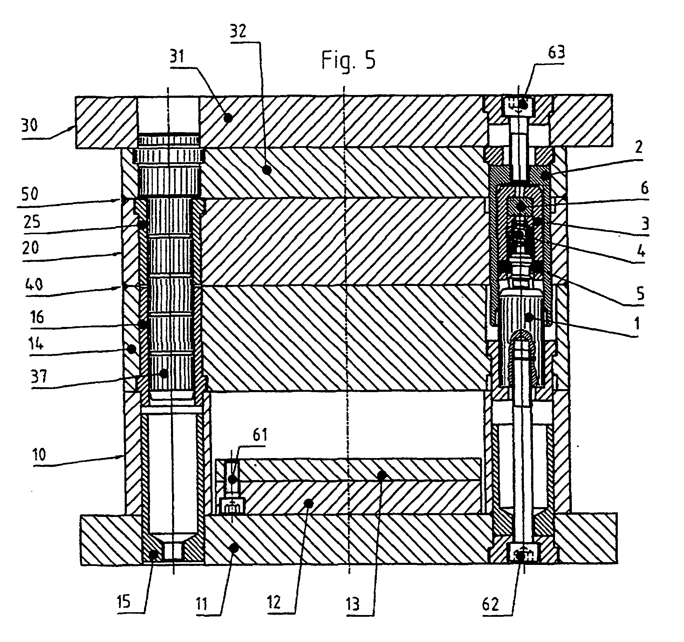

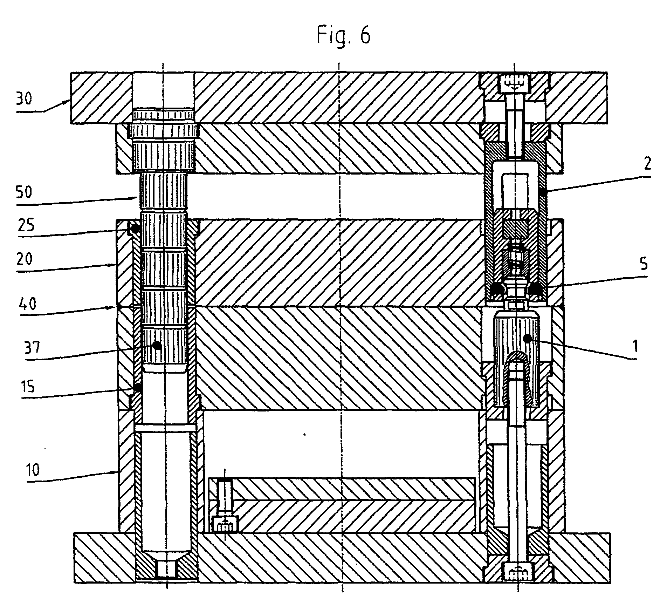

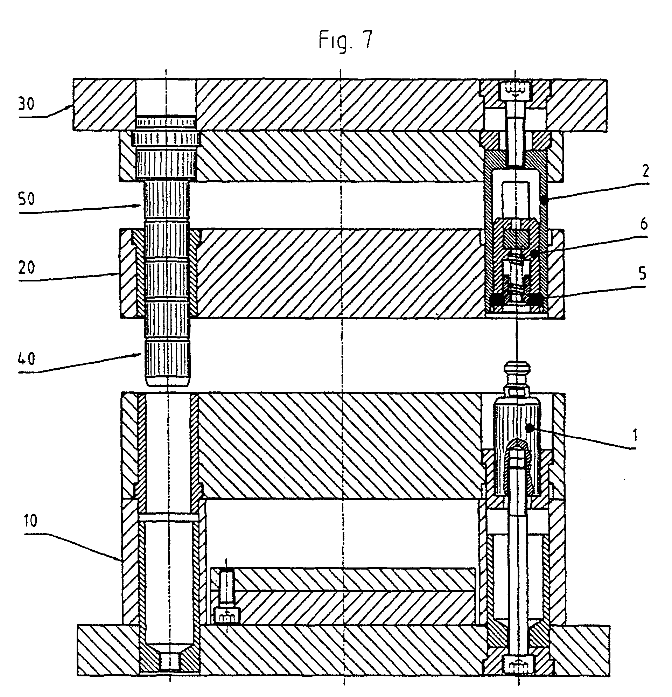

In der Ausgangslage - Fig. 5 - liegen die Formteile 10, 20 und 30 aneinander; der Kopf des Zugbolzens 1 greift durch das Segment 5 hindurch und liegt auf der Innenseite an ihm an. Beim Auseinanderfahren der Spritzgießform/des Formwerkzeugs öffnet sich zunächst die Trennebene 50 dadurch, daß einerseits der Führungsbolzen 37 in den Führungsbuchsen 15, 25 gleitet, andererseits das Gehäuse 2 in der zugeordneten Systembohrung - Fig. 6 -. Die Trennebene 40 ist noch unter der Wirkung des Segments 5 auf den Zugbolzen 1 geschlossen. Erreicht der Mitnehmer 6 in den diametral gegenüberliegenden Längsschlitzen des Gehäuses 2 den oberen Anschlag, ist eine weitere Relativbewegung zwischen den Formteilen 20 und 30 nicht mehr möglich. Vielmehr überwindet der Kopf des Zugbolzens 1 beim weiteren Auseinanderbewegen des Spritzgießwerkzeugs die von dem Segment 5 ausgeübte Kraft und fährt aus dem Gehäuse 2 heraus - Fig. 7 -. Es wird auch die andere Trennebene 40 geöffnet.

## Patentansprüche

1. Rundklinkenzug mit einem an einer Stirnseite offenen, hohlzylindrischen Gehäuse (2) einerseits und einem Zugbolzen (1) andererseits zur Durchführung einer Zug- und Verriegelungsfunktion, wobei in dem Gehäuse verdrehsicher zwischen zwei durch einen Mitnehmer (6) bestimmten Endlagen ein an derselben Stirnseite offener Kolben (3) in Axialrichtung bewegbar ist, in dem entgegen der Wirkung einer Feder (8) eine Sicherungsbuchse verschiebbar ist, deren äußere Endlage durch ein von dem Gehäuse gehaltenes und den Kolben radial durchsetzendes Segment (5) bestimmt ist, und wobei ein Kopf des Zugbolzens durch das Segment steckbar ist, **dadurch gekennzeichnet, daß** zur Durchführung einer zusätzlichen Führungsfunktion das Gehäuse (2) innen als Führungsbuchse und der Zugbolzen (1) außen als Führungsbolzen ausgeführt sind, wobei Führungsbuchse und Zugbolzen sich zentrieren.

2. Rundklinkenzug nach Anspruch 1, **dadurch gekennzeichnet, daß** das Gehäuse (2) einen absatz- oder anschlagdurchmesserfreien glatten Außendurchmesser aufweist.

3. Verwendung von mindestens zwei Rundklinkenzügen nach Anspruch 1 oder 2 in einer Spritzgießform mit drei axial zueinander bewegbaren, teilweise aus mehreren miteinander lösbar verspannten Platten aufgebauten Formteilen, die gegeneinander mittels Gleitführungsbolzen und -buchsen geführt sind, wobei die Gleitführungsbolzen und -buchsen in die Platten aller Formteile in Axialrichtung durchsetzenden Systembohrungen vorgesehen sind.

## Claims

1. A circular latch lock with a hollow cylindrical housing (2) open at one end face on the one hand and a drawing bolt (1) on the other hand for executing a drawing and locking function, a piston (3) which is open at the same end face being displaceable in the axial direction in a non-rotatable manner in the housing between two end positions determined by a driver (6) as a result of the fact that a safety bush is displaceable against the action of a spring (8), the outer end position of said safety bush being determined by a segment (5) held by the housing and penetrating the piston radially, and a head of the drawing bolt being insertable through the segment, **characterised in that**, in order to carry out an additional guidance function, the housing (2) is internally constructed as a guide bush and the drawing bolt (1) is externally constructed as a guide bolt, the guide bush and drawing bolt automatically centring.

2. A circular latch lock according to claim 1, **characterised in that** the housing (2) comprises a smooth, step-free or abutment diameter-free external diameter.

3. Use of at least two circular latch locks according to claim 1 or 2 in an injection mould with three mould sections, which are axially displaceable relative to one another, are partially formed by a plurality of plates releasably braced against one another and are guided relative to one another by means of sliding guide bolts and bushes, the sliding guide bolts and bushes being provided in system bores penetrating the plates of all mould sections in the axial direction.

## Revendications

1. Loquet cylindrique comportant d'une part un corps (2) en cylindre creux ouvert sur une face frontale et d'autre part un boulon de traction (1) pour assurer une fonction de traction et de verrouillage, dans lequel un piston (3), ouvert sur la même face frontale, est mobile dans le corps, dans la direction axiale, sans rotation possible entre deux positions d'extrémité définies par un organe d'entraînement (6), dans lequel est mobile en translation, en s'opposant à l'effet d'un ressort (8), une douille de fixation dont la position d'extrémité extérieure est définie par un segment (5) maintenu par le corps et traversant le piston dans le sens radial, une tête du boulon de traction pouvant être fichée à travers le segment, **caractérisé en ce que** pour réaliser une fonction supplémentaire de guidage, le corps (2) est conformé intérieurement en douille de guidage et le boulon de traction (1) est conformé extérieurement en boulon de guidage, en sorte que la douille de guidage et le boulon de traction se centrent l'un avec l'autre.

2. Loquet cylindrique selon la revendication 1,
**caractérisé en ce que** le corps (2) présente un diamètre extérieur lisse, sans diamètre ni d'épaulement ni de butée.

3. Utilisation d'au moins deux loquets cylindriques selon la revendication 1 ou la revendication 2 dans un moule d'injection qui comporte trois parties de moule, mobiles les unes par rapport aux autres dans la direction axiale, composées en partie de plusieurs plaques bridées de manière amovible les unes avec les autres qui sont guidées les unes par rapport aux autres au moyen de boulons et de douilles de guidage par glissement, les boulons et les douilles de guidage par glissement étant montés dans des trous d'alignement qui traversent les plaques de l'ensemble des parties de moule dans la direction axiale.
